# EUROPEAN PATENT APPLICATION

(11) **EP 4 810 408 A1**
(43) Date of publication of application: **23.09.2026**
(21) Application number: 25816170.2
(22) Date of filing: 10.04.2025
(51) Int. Cl.: B65G 11/20, B65G 69/20, H01M 4/04, H05B 3/40

(54) **CHUTE FOR SUPPLYING POWDER**

(30) Priority: 28.05.2024 KR 20240069321
(71) Applicant: LG Energy Solution, Ltd., Seoul 07335 (KR)
(72) Inventor: KIM, Soon, Daejeon 34122 (KR); KANG, Yunji, Daejeon 34122 (KR); LEE, Jeong Hyeon, Daejeon 34122 (KR); CHUNG, Changkwon, Daejeon 34122 (KR)
(74) Representative: Plasseraud IP
(86) International application number: PCT/KR2025/004873
(87) International publication number: WO 2025/249756

(57) **Abstract**

According to an embodiment of the present disclosure, a chute for supplying powder in a manufacturing process of a secondary battery comprises: a main body including an inflow portion into which the powder flows, a discharge portion through which the powder is discharged, and a base plate formed between them; and a plurality of heating lines formed in the main body, wherein each heating line comprises a first portion extending in a longitudinal direction of the main body, a second portion extending in parallel to the discharge portion, and a third portion extending in the longitudinal direction of the main body and spaced apart from the first portion.

## Description

### [TECHNICAL FIELD]

### Cross-Reference to Related Application(s)

This application claims priority to and the benefit of Korean Patent Application no. KR10-2024-0069321, filed on May 28, 2024, with the Korean Intellection Property Office, the entire contents of which are incorporated herein by reference.

The present disclosure relates to a chute for supplying powder, and more particularly, to a chute that supplies a powder while uniformly heating or keeping it warm in a manufacturing process of a secondary battery.

### [BACKGROUND ART]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, secondary batteries capable of charging and discharging are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium secondary batteries. Of these batteries, lithium secondary batteries are emerging as the most popular, as they are freely charged and discharged, and have low self-discharge rates and high energy density.

Such a lithium secondary battery mainly uses a lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and an exterior material, i.e., a battery case, which hermetically seals and houses the electrode assembly together with an electrolyte solution.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

The manufacturing process of such a lithium secondary battery is roughly classified into an electrode process, an assembly process, and a formation process. The electrode process is again classified into an active material mixing process, an electrode coating process, a rolling process, a slitting process, a winding process, and the like. Among these processes, the active material mixing process is a process in which a conductive material, an organic binder polymer, an additive, and the like are mixed with an electrode active material as necessary to obtain a mixture.

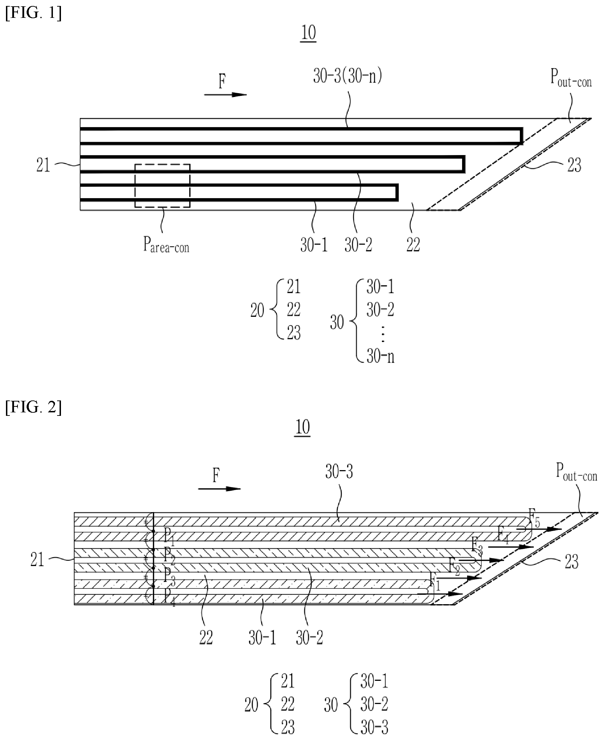

FIG. 1 is a conceptual diagram of a chute for supplying powder according to the prior art. FIG. 2 shows an illustrative example (comparative example) of a chute for supplying powder according to the prior art of FIG. 1.

Referring to FIG. 1, the chute 10 according to the prior art includes a main body 20 and a plurality of heating lines 30. The main body 20 includes an inflow portion 21 into which a powder flows, a base plate 22 through which a powder moves, and a discharge portion 23 through which a powder is discharged. A plurality of heating lines 30; 30-1, 30-2, ..., 30-n (where n is a natural number) are provided in the main body 20.

The powder flowing into the inflow portion 21 moves along the base plate 22 and is discharged from the discharge portion 23. The powder moves along the longitudinal direction of the base plate 22, and for convenience, the moving direction of the powder is indicated as "F". The discharge portion 23 is formed into a diagonal line form on the basis of the longitudinal direction of the base plate 22 of the main body 20. In other words, the discharge portion 23 is formed into a diagonal line form on the basis of the width direction (direction orthogonal to the longitudinal direction) of the base plate 22 of the main body 20.

A plurality of heating lines 30; 30-1, 30-2, ..., 30-n have a structure in which they start from the inflow portion 21, are arranged along the base plate 22, switch direction in the vicinity of the discharge portion 23, are arranged again along the base plate 22, and end at the inflow portion 21. The plurality of heating lines 30; 30-1, 30-2, ..., 30-n are formed, for example, in a U shape, as shown in FIG. 1.

On the other hand, in the chute 10 according to the prior art, the plurality of heating lines 30; 30-1, 30-2, ..., 30-n are arranged in a line along the width direction of the base plate 22 of the main body 20.

In the chute 10 according to the prior art, there is a risk that the temperature deviation of the powder becomes larger in the discharge portion 23 and/or the vicinity thereof (the area indicated by the dotted line, see P_{out-con}).

For example, the deviation between the temperature of the powder moving along a path F₁ passing through a heating line 30-1, a path F₃ passing through a heating line 30-2, and a path F₅ passing through a heating line 30-3, and the temperature of paths F₂, F₄ not passing through a heating line 30 may be slightly large. In addition, when a plurality of heating lines 30; 30-1, 30-2, 30-3 are each heated to different temperatures, the temperature deviation of the powder may be large even between the path F₁ passing through the heating line 30-1, the path F₃ passing through the heating line 30-2, and the path F₅ passing through the heating line 30-3.

There is a growing need to solve the temperature deviation (problem of nonuniformity in temperature) of the powder discharged from the discharge portion 23 of the chute 10 according to the prior art.

### [DETAILED DESCRIPTION OF THE INVENTION]

### [Technical Problem]

Therefore, it is an object of the present disclosure to provide a chute that supplies a powder while uniformly heating or keeping it warm in a manufacturing process of a secondary battery.

However, the technical problems solved by the embodiments of the present disclosure are not limited to those disclosed above, and may be expanded in various ways within the scope of the technical idea included in the present disclosure.

### [Technical Solution]

According to certain aspects of the present disclosure, there is provided a chute for supplying powder in a manufacturing process of a secondary battery, the chute comprising: a main body including an inflow portion into which the powder flows, a discharge portion through which the powder is discharged, and a base plate formed between the inflow portion and the discharge portion; and a plurality of heating lines formed in the main body, wherein each heating line comprises a first portion extending in a longitudinal direction of the main body, a second portion extending in parallel to the discharge portion, and a third portion extending in the longitudinal direction of the main body and spaced apart from the first portion.

The second portion of each of the plurality of heating lines may be arranged in parallel to the discharge portion, but is arranged so as to be sequentially apart from the discharge portion.

One heating line among adjacent heating lines may have a structure surrounding the other heating line.

The heating line located at the most central portion may be surrounded by the adjacent heating line, and then sequentially surrounded by the next adjacent heating line again, so that the outermost heating line surrounds the heating lines arranged inside.

The first portion of the outermost heating line may start from one end of the inflow portion or the vicinity thereof, and the third portion of the outermost heating line may end at the other end of the inflow portion or the vicinity thereof.

The heating line located at the most central portion may have a structure including the first portion, the second portion, and the third portion, or have a straight line structure including only the first portion excluding the second portion and the third portion.

The first portion may start from the inflow portion and extend in the longitudinal direction of the main body toward the discharge portion, the second portion may switch direction from the first portion and extends parallel to the discharge portion, and the third portion may switch direction from the second portion and extend in the longitudinal direction of the main body toward the inflow portion.

The discharge portion may form a right angle with the longitudinal direction of the main body.

The discharge portion may be formed into a diagonal line form on the basis of the longitudinal direction of the main body, and an intersection angle between an extension line of the first portion of the heating line and an extension line of the second portion may form an acute angle.

The heating line may comprise a fourth portion having a triangular planar structure, which is formed inside the point where the first and second portions of the heating line meet.

The point at which the first portion and the second portion of the heating line meet may have a round shape or a chamfered shape, and the point at which the second portion and the third portion of the heating line meet may have a round shape or a chamfered shape.

Each of the plurality of heating lines may be integrally formed by connecting the first portion, the second portion, and the third portion to each another.

The first portions of the plurality of heating lines may be respectively in parallel with one another, the second portions of the plurality of heating lines may be respectively in parallel with one another, and the third portions of the plurality of heating lines may be respectively in parallel with one another.

The plurality of heating lines may be individually controlled in temperature.

At least some of the plurality of heating lines may be heated to a lower temperature as it goes from the outermost heating line toward the central heating lines.

The heating line may be an electric heating wire.

The powder may be an electrode active material powder to be supplied onto a current collector.

### [Advantageous Effects]

According to the present disclosure, the powder can be uniformly heated and/or kept warm over the whole chute, thereby increasing the accuracy of temperature control for each of the plurality of heating lines.

In addition, the temperature of the electrode active material powder to be provided on the current collector in the chute can be uniformly provided, thereby improving the quality of the electrode sheet produced therefrom.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 shows a chute for supplying powder according to the prior art.
FIG. 2 shows an illustrative example (comparative example) of a chute for supplying powder according to the prior art of FIG. 1.
FIG. 3 shows a conceptual diagram of a chute for supplying powder according to certain embodiments of the present disclosure.
FIG. 4 is a reference diagram concerning the heating line of FIG. 3.
FIG. 5 is another reference diagram concerning the heating line of FIG. 3.
FIG. 6 shows one embodiment of the chute for supplying powder of FIG. 3.
FIG. 7 is a graph showing the temperature of the chute surface (surface of the base plate) in each of the embodiment (Example 1) of FIG. 6 and the comparative example of FIG. 2.
FIG. 8 is a schematic diagram showing a case where an electrode active material powder is supplied onto a current collector using a chute according to the embodiment of the present disclosure described above in FIGS. 3 to 7.
FIG. 9 shows a modified embodiment of the chute for supplying powder of FIG. 6, which is another embodiment of the present disclosure.
FIG. 10 shows a modified embodiment of the discharge portion of the chute for supplying powder of FIG. 3, which is another embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Hereinafter, specific embodiments of the present disclosure will be described with reference to the accompanying drawings.

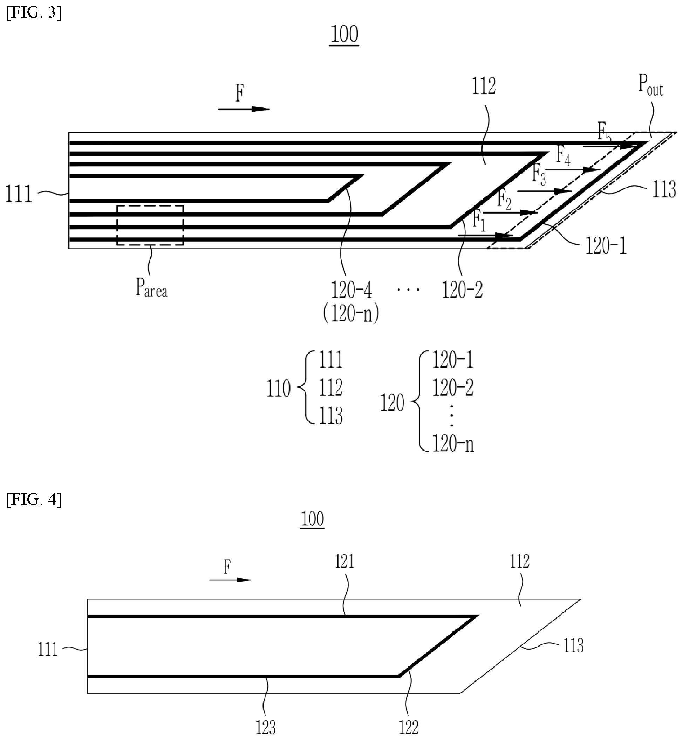

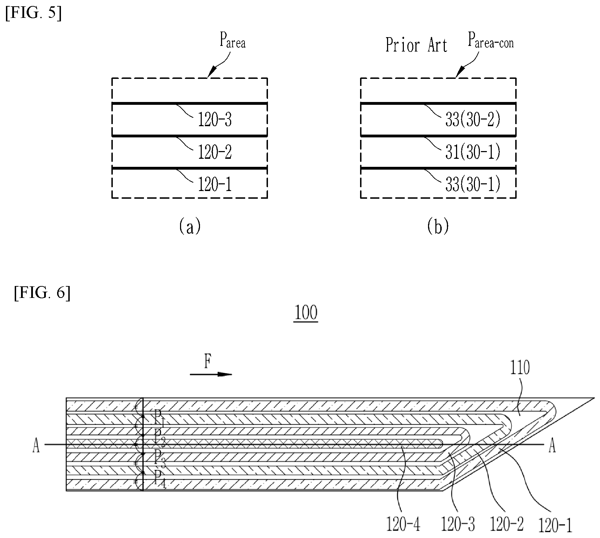

FIG. 3 shows a conceptual diagram of a chute for supplying powder according to certain embodiments of the present disclosure. FIG. 4 is a reference diagram concerning the heating line of FIG. 3. FIG. 5 is another reference diagram concerning the heating line of FIG. 3. FIG. 6 shows one embodiment of the chute for supplying powder of FIG. 3.

Referring to FIGS. 3 to 6, a chute 100 according to an embodiment of the present disclosure includes a main body 110 and a plurality of heating lines 120. The main body 110 includes an inflow portion 111 into which the powder flows, a base plate 112 through which the powder moves, and a discharge portion 113 through which the powder is discharged. The base plate 112 is formed between the inflow portion 111 and the discharge portion 113, and the powder flowing into the inflow portion 111 moves along the base plate 112 and is discharged from the discharge portion 113. Both side surfaces of the base plate 112 (the portion between the inflow portion 111 and the discharge portion 113) may include a blocking plate that protrudes upward from the base plate 112 so as to prevent the powder from leaking out. Thereby, the powder is prevented from falling out of the both side surfaces of the base plate 112 other than the discharge portion 113.

The powder moves along the longitudinal direction of the base plate 112, and for convenience, the moving direction of the powder is indicated as "F". For example, one end of the base plate 112 may be an inflow portion 111 and the other end of the base plate 112 may be a discharge portion 113.

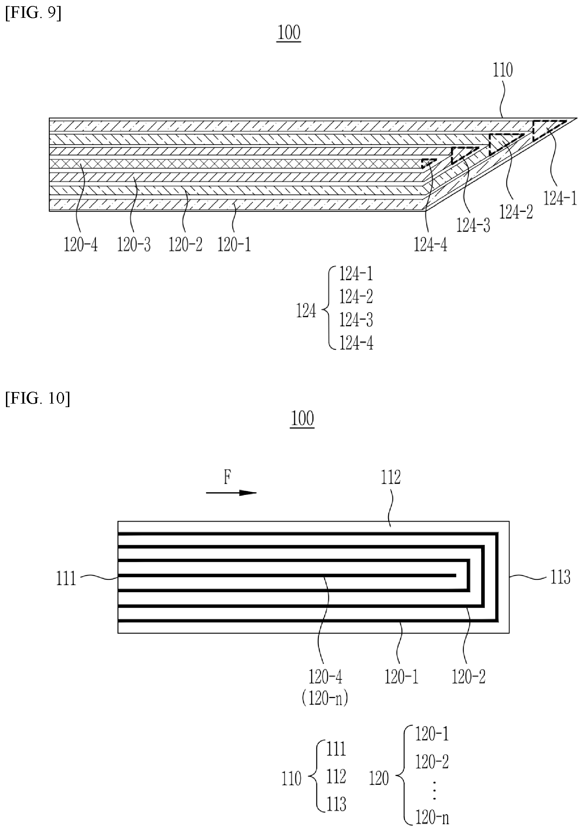

Meanwhile, the discharge portion 113 may be formed into a diagonal line form on the basis of the longitudinal direction of the base plate 112 of the main body 110. (In other words, the discharge portion 113 may be formed into a diagonal line form on the basis of the width direction (direction orthogonal to the longitudinal direction) of the base plate 112 of the main body 110). However, the present disclosure is not limited to that shown in FIG. 3, and various modifications and changes can be made, such as being formed at a right angle between the discharge portion 113 and the both sides of the base plate 112 (see FIG. 10).

A plurality of heating lines 120; 120-1, 120-2, ..., 120-n (where n is a natural number) are provided in the main body 110. FIG. 6 shows an example in which, for example, four heating lines 120 are provided, i.e., an example in which n=4, but the present disclosure is not limited thereto and various modifications can be made in accordance with the environment in which the present disclosure is realized.

First, referring to FIG. 3, in the chute 100 according to an embodiment of the present disclosure, each of the plurality of heating lines 120 is arranged in parallel to the discharge portion 113, but each of the plurality of heating lines 120 is arranged so as to be sequentially apart from the discharge portion 113.

FIG. 4 is a reference diagram of FIG. 3, which shows any one of the plurality of heating lines 120 of FIG. 3. Referring to FIG. 4, each of the plurality of heating lines 120 comprises a first portion 121 extending in the longitudinal direction of the base plate 111 of the main body 110, a second portion 122 extending in parallel to the discharge portion 113, and a third portion 123 extending again in the longitudinal direction of the base plate 111. The first portion 121 and the third portion 123 are spaced apart from each other. The first portion 121, the second portion 122 and the third portion 123 of the heating line 120 may be connected to each other and formed integrally. Additionally, the point at which the first portion 121 and the third portion 123 meet may form an intersection angle (e.g., an acute angle) as shown in FIG. 3, but may also be chamfered (not shown) or rounded (see FIG. 6). In some cases, as described later in the modified embodiment of FIG. 9, when the extension line of the first portion 121 and the extension line of the third portion 123 intersect to form an acute angle, it may have a planar structure of a triangle (e.g., a right-angled triangle) (see FIG. 9) so as to reduce the blind spot inside the point at which the first portion 121 and the third portion 123 meet (see FIG. 9).

Likewise, the point at which the second portion 122 and the third portion 123 meet may form an intersection angle (e.g., an obtuse angle) (see FIG. 3), but may also be chamfered (not shown) or rounded (see FIG. 6). Further, although not shown in the present disclosure, in some cases, if a blind spot is formed even at the point at which the second portion 122 and the third portion 123 meet, it is possible to further have a structure for reducing such a blind spot.

Further, if the discharge portion 113 is not formed into a diagonal line form, but forms a right angle with the side part of the base plate 112, various modifications and changes may be made, for example, the intersection angle of the point at which the first portion 121 and the third portion 123 meet and the intersection angle of the point at which the second portion 122 and the third portion 123 meet may be a right angle, respectively.

The first portion 121 of the heating line 120 starts from the inflow portion 111 and is arranged along the base plate 112. The second portion 122 of the heating line 120 switches direction and is arranged in parallel to the discharge portion 113. The third portion 123 of the heating line 120 has a structure in which it switches direction again and is arranged along the base plate 112 again and ends at the inflow portion 111.

Each of such heating lines 120 can be formed, for example, in a roughly U-shaped or regression type structure as shown in FIG. 1.

At this time, in the discharge portion 113 and/or the vicinity thereof (the area indicated by the dotted line, see Pₒᵤₜ) of FIG. 3, the second portion 122 of the heating line 120 is arranged in parallel along the discharge portion 113 (i.e., in parallel to the edge line of the discharge portion 113).

Thereby, the temperature deviation of the powder in the discharge portion 113 and/or the vicinity thereof (Pₒᵤₜ) is reduced, and temperature uniformity of the powder can be realized. Furthermore, since all of the paths F₁, F₂, F₃, F₄, F₅ in FIG. 3 pass through at least one heating line 120 (heating line located at the outermost side) among the plurality of heating lines 120, the temperature of the powder discharged from the discharge portion 113 can be uniformized, unlike the case of the prior art of FIG. 1. That is, the temperature deviation between the powders passing through each of the paths F₁, F₂, F₃, F₄, F₅ in FIG. 3 can be significantly reduced.

Meanwhile, the example of FIG. 3 illustrates a case where one heating line 120-1 passes through the area of Pₒᵤₜ, but the present disclosure is not limited thereto, and the second portions 122 of some heating lines 120 among the plurality of heating lines 120 can be further arranged in parallel along the discharge portion 113 (i.e., in parallel to the edge line of the discharge portion 113) in the Pₒᵤₜ area.

In the chute 100 according to an embodiment of the present disclosure, a plurality of heating lines 120 have a structure in which one heating line 120 among the adjacent heating lines 120 surrounds another heating line 120 among the adjacent heating lines 120. The heating line 120 located at the most central portion is surrounded by the adjacent heating line 120 and then sequentially surrounded by the next adjacent heating line 120 again, thereby forming a structure in which the outermost heating line 120 surrounds all the heating lines 120 located inside the outermost heating line 120.

On the contrary, the following is described on the basis of the outermost heating line 120. The outermost heating line 120 is called the first heating line 120-1. First, the first heating line 120-1 starts from one end of the inflow portion 111 or the vicinity thereof and is arranged along the outermost one side part of the base plate 112 or the vicinity thereof (see the first portion 121). Next, the first heating line 120-1 switches direction and is arranged in parallel to the discharge portion 113 or the vicinity thereof (see the second portion 122). Next, the first heating line 120-1 has a structure in which it switches direction and is arranged along the outermost other side part of the base plate 112 or the vicinity thereof, and ends at the other end of the inflow portion 111 or the vicinity thereof (see the third portion 123).

Similar to the first heating line 120-1, the second heating line 120-2 adjacent to the first heating line 120-1 has a structure in which it starts from the inflow portion 111 and is arranged along the base plate 112, is arranged in parallel to the discharge portion 113, and then is again arranged along the base plate 112 and ends at the inflow portion 111. At this time, the second heating line 120-2 is separated inward from the adjacent first heating line 120-1 and arranged in parallel thereto. That is, the second heating line 120-2 is surrounded by the first heating line 120-1.

Likewise, a plurality of heating lines 120; 120-1, 120-2, ..., 120-n are arranged in the manner described above, so that the heating line 120-n arranged at the most central portion is surrounded by the remaining heating lines 120. The heating line 120-n arranged at the most central portion may have a structure including a first portion 121, a second portion 122, and a third portion 123, similar to the remaining heating lines 120, or may be provided into a straight line form including only the first portion 121.

Furthermore, in regard to the above-described structure of the plurality of heating lines 120, the first portions 121 of the plurality of heating lines 120 are respectively in parallel with one another (see FIG. 4), the second portions 122 are in parallel with one another (see FIG. 4), and the third portions 123 are in parallel with one another (see FIG. 4).

On the other hand, each of the plurality of heating lines 120 may be individually controlled in temperature. More specifically, the plurality of heating lines 120 may be respectively heated to different temperatures, and in some cases, some or all of them may also be heated to the same temperature.

Furthermore, it is not always the case that the temperature uniformity of the powder is achieved only when all of the plurality of heating lines 120 are heated to the same temperature. For example, in some cases, when the amounts of the powders passing over each of the plurality of heating lines 120 are different from each other, there may be the case where the heating line 120 located in the area where more powder passes must be heated to a higher temperature. As described above, there may be the case where the temperature of the heating line 120 located at the outermost side must be heated to a higher temperature than the other heating lines 120. Needless to say, in some cases, it may be necessary to heat all of the heating lines 120 to the same temperature. The important point here is that each of the plurality of heating lines 120 can be individually controlled in temperature.

Referring to FIG. 5, which is a reference diagram of FIG. 3, the principle that temperature uniformity of the powder can also be achieved at any point (see Pₐᵣₑₐ) of the base plate 112 of the chute 100 of FIG. 3 will be described.

(a) of FIG. 5 is an enlarged view of Pₐᵣₑₐ of FIG. 3, and (b) of FIG. 5 is an enlarged view of P_{area-con} of FIG. 1, which is a comparative example of (a) of FIG. 5. It should be emphasized that each of Pₐᵣₑₐ and P_{area-con} described below is not limited to those shown in FIG. 3 and FIG. 1, but corresponds to any point of the base plate 112.

First, referring to (a) of FIG. 5, the heating line 120-1 and the heating line 120-3 are arranged on both sides on the basis of the heating line 120-2. That is, they are adjacent to each other between heating lines 120 that are different from each other in Pₐᵣₑₐ.

In Pₐᵣₑₐ, heat exchange occurs between the heating line 120-1 and the heating line 120-2 to achieve an equilibrium temperature, and heat exchange also occurs between the heating line 120-2 and the heating line 120-3 to achieve an equilibrium temperature. At this time, in accordance with the process environment or conditions, the heating line 120-1, the heating line 120-2, and the heating line 120-3 may be heated to different temperatures respectively, or some or all of them may be heated to the same temperature.

Thus, even if the temperature of any one heating line 120 among the heating line 120-1, the heating line 120-2, and the heating line 120-3 changes, the Pₐᵣₑₐ may have a roughly uniform temperature as a whole. Additionally, when viewed within Pₐᵣₑₐ, the temperatures of the heating line 120-1, the heating line 120-2 and the heating line 120-3 can be individually controlled, so that the temperature is controlled more precisely to have a uniform temperature over the whole Pₐᵣₑₐ.

However, referring to (b) of FIG. 5 according to the prior art, in P_{area-con}, the third portion 33 of the heating line 30-1 and the third portion 33 of the adjacent heating line 30-2 are respectively arranged on both sides on the basis of the first portion 31 of the heating line 30-1. When viewed within the P_{area-con}, only the first portion 31 of the heating line 30-1 and the third portion 33 of the heating line 30-1 have the same temperature, and the third portion 33 of the adjacent heating line 30-2 is controlled to be identical or different from the temperature of the heating line 30-1, so that the accuracy of the temperature control becomes lower than that of (a) of FIG. 5 according to the present disclosure.

That is, even in the prior art, even if the temperatures of the plurality of heating lines are individually controlled similarly to the case of the present disclosure, the heating line arrangement of the present disclosure in (a) of FIG. 5 can increase the accuracy of temperature control for temperature uniformity of the powder compared to the heating line arrangement of the prior art in (b) of FIG. 5.

On the other hand, in the case of the present disclosure, it is apparent that, compared to the case of the prior art, the temperature deviation of the powder is reduced even at the discharge portion 113 and/or the vicinity thereof (Pₒᵤₜ) as described above in FIG. 3, and the temperature uniformity of the powder can be realized.

The method of realizing the heating line 120 according to the present disclosure is not particularly limited, as long as it can heat or keep the chute 100 warm. Each of the heating lines 120 may be, for example, an electric heating wire, or may be realized in various ways, such as, being able to be realized in the form of a pipe (tube) through which a heating fluid flows.

FIG. 6 illustrates a case where a plurality of heating lines 120, e.g., four, are provided, which is an embodiment of the present disclosure.

In the case of FIG. 6, even if the plurality of heating lines 120 are respectively heated to different temperatures, the temperature deviation of the surface of the base plate 112 can be reduced more than when the plurality of heating lines 30 are respectively heated to different temperatures in the case of the comparative example of FIG. 2.

First, in the embodiment of FIG. 6 (Example 1), the first heating line 120-1 located at the outermost side is located relatively closer to the outside of the chute 100 than the other heating lines 120, so that the heat loss most often occurs. To prevent this, the first heating line 120-1 is heated to the highest temperature among the plurality of heating lines 120. In the illustrative example of FIG. 6, the first heating line 120-1 is heated to, for example, 100 degrees Celsius.

The second heating line 120-2 arranged subsequently in order can be heated to a lower temperature than the first heating line 120-1. Since the second heating line 120-2 has a structure surrounded by the first heating line 120-1, it is relatively less affected by the external temperature than the first heating line 120-1, so that when the heat loss to the outside is less than the first heating line 120-1, it can be realized in this way. In the illustrative example of FIG. 6, the second heating line 120-2 is heated to, for example, 90 degrees Celsius.

Likewise, the third heating line 120-3 arranged subsequently in order can be heated to a lower temperature than the second heating line 120-2. Since the third heating line 120-3 has a structure surrounded by the second heating line 120-2 and the first heating line 120-1, it is relatively less affected by the external temperature than the second heating line 120-2, so that when the heat loss to the outside is less than that of the second heating line 120-2, it can be realized in this way. In the illustrative example of FIG. 6, the third heating line 120-3 is heated to, for example, 80 degrees Celsius.

The fourth heating line 120-4 located at the most central portion can be heated to a lower temperature than the third heating line 120-3, or in some cases, may also be heated to a higher temperature.

Furthermore, there may be the case where the temperature of the fourth heating line 120-4 is set low in accordance with the process environment. For example, when the powder is transported on the chute 100, the thickness of the powder moving along the longitudinal direction of the chute 100 in the center of the chute 100 may be much lower than the thickness of the powder moving along the longitudinal direction of the chute 100 closer to the outermost edge of the chute 100. In this case, since the powder thinly stacked in the center of the chute 100 is more easily heated than the powder thickly stacked on the outer edge of the chute, it is advantageous to set the temperature of the fourth heating line 120-4 lower in order to heat the powder to the same temperature as a whole.

However, the present disclosure is not limited to those described above, and the temperature of each of the plurality of heating lines 120 may be individually controlled in compliance with the process environment and conditions under which the present disclosure is realized.

According to the plurality of heating lines 120 according to the present disclosure in FIG. 6, the chute 100 can be heated uniformly as a whole, compared to the prior art. Furthermore, the A-A line of FIG. 6 is a line extending in parallel to the longitudinal direction (the moving direction of the powder, F) of the chute 100 at the center point in the width direction of the chute 100. On each of both sides of the chute 100 divided with respect to the A-A line, the first heating line 120-1, the second heating line 120-2, the third heating line 120-3, and the fourth heating line 120-4 are arranged in this order as it goes from the outermost part toward the center. As described above, each heating line 120 is heated sequentially to a lower temperature as it goes from the first heating line 120-1 to the central portion, but heat loss to the outside is relatively reduced as it goes from the first heating line 120-1 toward the central portion, which results in an effect of uniformly heating the base plate 112 of the chute 100 as a whole. Of course, the temperature of the fourth heating line 120-4 located at the most central portion may be controlled to a different temperature for other reasons as described above.

In some cases, when all of the heating lines 120 are heated to the same temperature at the beginning of the process, but the temperature decreases relatively only in the vicinity of the outermost edge of the chute 100 with the lapse of time, various modifications and changes can be made, for example, only the temperature of the heating line 120-1 located at the outermost side can be set higher than the other heating lines 120. For reference, in the case of the prior art, even if only the heating line 30-1 is heated, it is not possible to heat uniformly along the outermost edge of the chute 10.

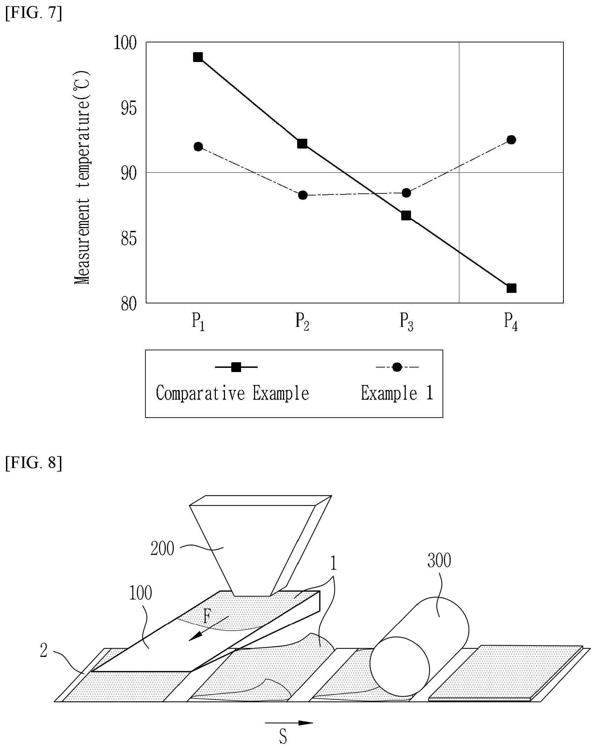

FIG. 7 is a graph showing the temperature of the chute surface (surface of the base plate) in each of the embodiment (Example 1) of FIG. 6 and the comparative example of FIG. 2. In FIG. 6, the points P₁, P₂, P₃ and P₄ are each arbitrarily selected points, e.g., each point divided into four equal parts along the width direction of chute 100.

Referring to the graph of FIG. 7, the powder passing over the surface of the base plate 112 as well as the discharge portion 113 shows that the temperature deviation is significantly reduced between positions along the width direction of the chute 100. For reference, in the case of the present disclosure, for details concerning the reduction of the temperature deviation according to the position of the powder discharged from the discharge portion 113, refer to the contents described above in FIG. 3.

Both points P₁ and P₄ can be located on the surface of the base plate 112 between the first heating line 120-1 and the second heating line 120-2, or, in some cases, may be located on the surface of the base plate 112 above the first heating line 120-1 or the second heating line 120-2. In the embodiment of FIG. 6, the first heating line 120-1 and the second heating line 120-2 are heated to 100 degrees Celsius and 90 degrees Celsius, respectively, so that the surface temperature of the base plate 112 at points P₁ and P₄ has some temperature between 90 degrees Celsius and 100 degrees Celsius.

Additionally, both points P₂ and P₃ may be located on the surface of the base plate 112 between the third heating line 120-3 and the fourth heating line 120-4, or in some cases, may be located on the surface of the base plate 112 above the third heating line 120-3 or the fourth heating line 120-4. In the embodiment of FIG. 6, the third heating line 120-3 and the fourth heating line 120-4 are heated to 80 degrees Celsius and 100 degrees Celsius, respectively, so that the surface temperature of the base plate 112 at points P₂ and P₃ has some temperature between 80 degrees Celsius and 100 degrees Celsius.

Meanwhile, the comparative example of FIG. 2 is a case where the plurality of heating lines 30 are respectively heated to different temperatures in the chute 10 of FIGS. 1 and 2 according to the prior art. In the comparative example of FIG. 2, the first heating line 30-1 is heated to, for example, 100 degrees Celsius. The second heating line 30-2 is heated to, for example, 90 degrees Celsius. The third heating line 30-3 is heated to, for example, 80 degrees Celsius. In the case of the comparative example of FIG. 2, the deviation between the temperatures of the surface of the chute 100 (the surface of the base plate 112) measured at each of points P₁, P₂, P₃, and P₄ becomes large as shown in the graph of FIG. 7.

In the case of FIG. 6, this shows that the maximum temperature deviation is 4.28 degrees Celsius, while in the case of the comparative example of FIG. 2, the maximum temperature deviation is 17.72 degrees Celsius, and the temperature deviation of Example 1 is smaller than that of the comparative example. Therefore, it can be seen that the temperature of the powder discharged from the discharge portion in the chute 100 according to Example 1 of the present disclosure can be made more uniform than that of the chute 10 of the comparative example according to the prior art.

FIG. 8 is a schematic diagram showing a case where an electrode active material powder is supplied onto a current collector using a chute according to the embodiment of the present disclosure described above in FIGS. 3 to 7.

Referring to FIG. 8, a feeder 200 is located above the inflow portion 111 (see FIG. 3) of the chute 100. The electrode active material powder 1 is accommodated inside the feeder 200, and then the electrode active material powder 1 is supplied onto the inflow portion 111 of the chute 100. The electrode active material powder 1 moves along the moving direction F on the base plate 112 (see FIG. 3) of the chute 100. At this time, while moving on the base plate 112 of the chute 100, the electrode active material powder 1 is heated and/or kept warm by a plurality of heating lines 120 as described above in FIGS. 3 to 7.

The chute 100 may be coupled onto a driving device (not shown) that vibrates the chute 100 at least in the longitudinal direction of the chute 100. The driving device may be a vibration generating device, including an inductor, an armature, and the like. As the powder 1 on the main body 110 of the chute 100 vibrates in response to the vibration of the driving device, it may move from the inflow portion 111 towards the discharge portion 113. The driving device coupled to the chute 100 refers to a normal driving device for chutes and therefore, a more detailed description thereof is omitted.

The electrode active material powder 1 is supplied onto the current collector 2 from the discharge portion 113 of the chute 100 (see FIG. 3). At this time, the current collector 2 moves along the running direction S. The portion where the electrode active material powder 1 is supplied onto the current collector 2 and is flattened by the rolling member 300 (e.g., rolling roll) becomes a coated portion of the electrode. The portion where the electrode active material powder 1 is not supplied onto the current collector 2 and the current collector 2 is exposed as it becomes an uncoated portion of the electrode.

FIG. 9 shows a modified embodiment of the chute for supplying powder of FIG. 6, which is another embodiment of the present disclosure.

If the discharge portion 113 of the chute 100 is formed in a diagonal direction, an acute angle is formed when the longitudinal direction of the base plate 112 of the chute 100 and the diagonal direction of the discharge portion 113 of the chute 100 intersect. Furthermore, one end of the discharge portion 113 of the chute 100 forms an acute angle, and the other end forms an obtuse angle.

Meanwhile, in the embodiment of FIG. 6, when each of the plurality of heating lines 120 passes through one end forming an acute angle or the vicinity thereof among the discharge portion 113 of the chute 100, the interval between adjacent heating lines 120 may be increased to form a blind spot.

To compensate for this, in the modified embodiment of FIG. 9, each of the plurality of heating lines 120 includes fourth portions 124; 124-1, 124-2, 124-3, 124-4 having a triangular (e.g., right triangle) planar structure at the point where the first portion 121 (see FIG. 4) formed along the longitudinal direction of the base plate 112 of the chute 100 and the second portion 122 (see FIG. 4) formed along the direction (diagonal direction) of the discharge portion 113 of the chute 100 form an acute angle. This allows the heating line 120 to pass evenly throughout the chute 100 without any blind spots.

Meanwhile, when the heating line 120-4 located at the most central portion of the plurality of heating lines 120 is formed into a straight line form (when it consists of only the first portion 121 (see FIG. 4) and does not include the second portion 122 (see FIG. 4) and the third portion 123 (see FIG. 4)), the end facing the discharge portion of the heating line 120-4 may include a fourth portion 124-4 having a triangular planar structure.

FIG. 10 shows a modified embodiment of the discharge portion of the chute for supplying powder of FIG. 3, which is another embodiment of the present disclosure.

The embodiment of FIG. 10 shows an example where the discharge portion 113 forms a right angle with the longitudinal direction of the main body 110. A right angle is formed between the discharge portion 113 and both side parts of the base plate 112. The description except for the intersection angle between the discharge portion 113 and the side parts along the longitudinal direction of the base plate 112 in FIG. 10 overlaps with the contents described above in FIGS. 3 to 9, so refer to the above.

On the other hand, the embodiments of the present disclosure described above can be applied to, for example, a manufacturing process of a dry electrode.

The electrode according to the present disclosure can be a positive electrode or a negative electrode. That is, the manufacturing process of the electrode according to the present disclosure is not particularly limited to the positive electrode or the negative electrode, and can be easily applied to the manufacture of any electrode, and can manufacture different electrodes according to the material (e.g., positive electrode active material or negative electrode active material) used in the manufacture of each electrode. Therefore, the term "electrode" used herein, such as electrode, electrode active material, current collector, etc., may mean both a positive electrode and a negative electrode, unless otherwise defined.

In the manufacturing process of the dry electrode of the present disclosure, an electrode active material and a binder polymer are mixed in a dry manner to obtain a mixture.

The positive electrode active material can be used without particular limitation as long as it is a material that contains lithium and thus can intercalate/deintercalate lithium ions. For example, the positive electrode active material may include a layered compound such as lithium cobalt oxide (LiCoO₂) and lithium nickel oxide (LiNiO₂) or a compound substituted with one or more transition metals; lithium manganese oxides such as the formula Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by the formula LiNi₁₋ₓMₓO₂ (where M=Co, Mn, Al, Cu, Fe, Mg, B or Ga, and x=0.01 ~ 0.3); lithium manganese composite oxide represented by the formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by the formula LiNiₓMn₂₋ₓO₄; LiMn₂O₄ in which a part of Li in the formula is substituted with an alkaline earth metal ion; disulfide compound; Fe₂(MoO₄)₃, or the like, but are not limited thereto. Further, the positive electrode may have a positive electrode mixture layer comprising metallic lithium, a carbon material, a metal compound or a mixture thereof. The metal compound may be a compound containing one or more metal elements selected from the group consisting of Si, Ge, Sn, Pb, P, Sb, Bi, Al, Ga, In, Ti, Mn, Fe, Co, Ni, Cu, Zn, Ag, Mg, Sr, and Ba, or a mixture thereof.

The negative electrode may be manufactured by providing a negative electrode active material onto a negative electrode current collector and rolling it, or may be manufactured in a dry manner similarly to the above-mentioned manufacturing process of the positive electrode, and may optionally further contain a conductive material, an organic binder polymer, an additive, and the like as in the positive electrode, if necessary.

In addition, the negative electrode active material may include, for example, a carbon material and a silicon material. The carbon material refers to a carbon material containing carbon atoms as a main component, and examples of the carbon material include graphite having a graphene structure completely formed as in natural graphite, soft carbon having a low-crystalline graphene structure (structure in which hexagonal honeycomb-shaped planes of carbons are arranged in a layered form), and hard carbon, artificial graphite, expanded graphite, carbon fiber, non-graphitizable carbon, carbon black, acetylene black, Ketjen black, carbon nanotube, fullerene, activated carbon, graphene, and the like in which these structures are mixed with amorphous portions, and preferably, may include one or more selected from the group consisting of natural graphite, artificial graphite, and carbon nanotube. More preferably, the carbon material includes natural graphite and/or artificial graphite, and may include one or more among carbon blacks and carbon nanotubes together with the natural graphite and/or artificial graphite. In this case, the carbon material may include 0.1 to 10 parts by weight of carbon black and/or carbon nanotubes based on 100 parts by weight of the total carbon material, and more specifically, 0.1 to 5 parts by weight; or 0.1 to 2 parts by weight of carbon black and/or carbon nanotube based on 100 parts by weight of the total carbon material.

In addition, the silicon material is a particle containing silicon (Si) as a main component as a metal component, and may include one or more of silicon (Si) particles and silicon oxide (SiO_{X}, where 1≤X≤2) particles. In one embodiment, the silicon material may include silicon (Si) particles, silicon monoxide (SiO) particles, silicon dioxide (SiO₂) particles, or a mixture of these particles.

Further, according to the present disclosure, the current collector includes a metal plate having electrical conductivity and may be one selected suitably depending on polarity of electrodes known in the field of secondary batteries.

Further, according to the present disclosure, the conductive material is not particularly limited, as long as it causes no chemical change in the corresponding battery and has conductivity.

Further, according to the present disclosure, the binder resin is not particularly limited as long as it is a compound that assists binding between the active material and the conductive material and binding to the current collector.

According to embodiments of the present disclosure, when patterns are to be formed on the surface of an electrode, an additional process for forming the pattern is not required, thereby improving process efficiency. Further, by using the electrode manufacturing apparatus according to embodiments of the present disclosure, the specific surface area of the electrode can be effectively expanded, which allows more electrolyte ions to be stored when charging the battery, thereby improving battery performance.

The terms representing directions such as the front side, the rear side, the left side, the right side, the upper side, and the lower side have been used in the present embodiment, but it is obvious to those skilled in the art that the terms used are provided simply for convenience of description, and may become different according to the position of an object, the position of an observer, or the like.

The electrode manufactured by applying the control method of the electrode manufacturing apparatus according to the present embodiment described above may be included in a secondary battery, and a plurality of such secondary batteries may be gathered together to form a battery module. The battery modules can be mounted together with various control and protection systems such as a BMS (battery management system), and a cooling system to form a battery pack.

The secondary battery, the battery module or the battery pack can be applied to various devices, which include, for example, transportation vehicles such as electric bicycles, electric vehicles, and hybrids vehicles. However, without being limited thereto, the battery modules or the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

1: electrode active material powder
2: current collector
10: chute
20: main body
21: inflow portion
22: base plate
23: discharge portion
30: heating line
100: chute
110: main body
111: inflow portion
112: base plate
113: discharge portion
120: heating line
121: first portion
122: second portion
123: third portion
124: fourth portion
200: feeder
300: rolling member

## Claims

1. A chute for supplying powder in a manufacturing process of a secondary battery, the chute comprising:
a main body including an inflow portion into which the powder flows, a discharge portion through which the powder is discharged, and a base plate formed between the inflow portion and the discharge portion; and
a plurality of heating lines formed in the main body,
wherein each heating line comprises a first portion extending in a longitudinal direction of the main body, a second portion extending in parallel to the discharge portion, and a third portion extending in the longitudinal direction of the main body and spaced apart from the first portion.

2. The chute for supplying powder according to claim 1,
wherein the second portion of each of the plurality of heating lines is arranged in parallel to the discharge portion, but is arranged so as to be sequentially apart from the discharge portion.

3. The chute for supplying powder according to claim 1,
wherein one heating line among adjacent heating lines has a structure surrounding the other heating line.

4. The chute for supplying powder according to claim 1,
wherein the heating line located at the most central portion is surrounded by the adjacent heating line, and then sequentially surrounded by the next adjacent heating line again, so that the outermost heating line surrounds the heating lines arranged inside.

5. The chute for supplying powder according to claim 4,
wherein the first portion of the outermost heating line starts from one end of the inflow portion or the vicinity thereof, and the third portion of the outermost heating line ends at the other end of the inflow portion or the vicinity thereof.

6. The chute for supplying powder according to claim 4,
wherein the heating line located at the most central portion has a structure including the first portion, the second portion, and the third portion, or has a straight line structure including only the first portion excluding the second portion and the third portion.

7. The chute for supplying powder according to claim 1,
wherein the first portion starts from the inflow portion and extends in the longitudinal direction of the main body toward the discharge portion,
the second portion switches direction from the first portion and extends parallel to the discharge portion, and
the third portion switches direction from the second portion and extends in the longitudinal direction of the main body toward the inflow portion.

8. The chute for supplying powder according to claim 1,
wherein the discharge portion forms a right angle with the longitudinal direction of the main body.

9. The chute for supplying powder according to claim 1,
wherein the discharge portion is formed into a diagonal line form on the basis of the longitudinal direction of the main body, and
an intersection angle between an extension line of the first portion of the heating line and an extension line of the second portion forms an acute angle.

10. The chute for supplying powder according to claim 9,
wherein the heating line comprises a fourth portion having a triangular planar structure, which is formed inside the point where the first and second portions of the heating line meet.

11. The chute for supplying powder according to claim 1,
wherein each of the plurality of heating lines is integrally formed by connecting the first portion, the second portion, and the third portion to each another.

12. The chute for supplying powder according to claim 11,
wherein the point at which the first portion and the second portion of the heating line meet has a round shape or a chamfered shape, and the point at which the second portion and the third portion of the heating line meet has a round shape or a chamfered shape.

13. The chute for supplying powder according to claim 1,
wherein the first portions of the plurality of heating lines are respectively in parallel with one another,
the second portions of the plurality of heating lines are respectively in parallel with one another, and
the third portions of the plurality of heating lines are respectively in parallel with one another.

14. The chute for supplying powder according to claim 1,
wherein the plurality of heating lines are individually controlled in temperature.

15. The chute for supplying powder according to claim 1,
wherein at least some of the plurality of heating lines are heated to a lower temperature as it goes from the outermost heating line toward the central heating lines.

16. The chute for supplying powder according to claim 1,
wherein the heating line is an electric heating wire.

17. The chute for supplying powder according to claim 1,
wherein the powder is an electrode active material powder to be supplied onto a current collector.
